# EUROPEAN PATENT SPECIFICATION

(11) **EP 4 534 862 B1**
(45) Date of publication and mention of the grant of the patent: **02.12.2026**
(21) Application number: 24205117.5
(22) Date of filing: 07.10.2024
(51) Int. Cl.: F16B 37/08

(54) **THREADED ROD LOCKING DEVICES AND METHODS**
GEWINDESTANGENVERRIEGELUNGSVORRICHTUNGEN UND VERFAHREN
DISPOSITIFS ET PROCÉDÉS DE VERROUILLAGE DE TIGE FILETÉE

(30) Priority: 06.10.2023 US 202363588363 P
(43) Date of publication of application: 09.04.2025
(73) Proprietor: Erico International Corporation, Solon, OH 44139 (US)
(72) Inventor: Oh, Michael Hung-Sun, Solon (US)
(74) Representative: Barker Brettell LLP

(56) References cited:
- WO-A1-2014/179791
- US-A1- 2015 275 505
- US-A1- 2016 326 738
- US-A1- 2020 325 924

## Description

### CROSS-REFERENCE TO RELATED APPLICATIONS

This application claims the benefit of U.S. Provisional Application No. 63/588,363, filed October 6, 2024.

### BACKGROUND

In many applications it may be useful to support a threaded rod from a pre-installed anchor or another pre-installed threaded rod. For example, in some construction applications (e.g., multi-story buildings) poured concrete is used between floors. In some scenarios, threaded anchors can be installed to a metal or wood deck prior to pouring the concrete. In other scenarios, an anchor can be installed after the concrete has set. The anchors can be used as a support point for suspending equipment for utilities such as, for example, plumbing pipes, HVAC ducts and equipment, electrical conduit and equipment, or other equipment.

WO 2014/179791 A1 relates to a threaded rod hanger having a quick lock plunger mechanism that includes plunger pieces within a tapered hole in a housing. The plunger pieces have tapered outer surfaces. A spring within the housing presses the plunger pieces toward the narrow end of the bore, with the spring located between the plunger pieces and a back plate that closes off part of a wide end of the tapered bore. Once the threaded rod has been inserted between the plunger pieces and released, the plunger pieces are pushed toward the narrow bore end. This causes the plunger pieces to press inward, engaging the plunger pieces with external threads on the threaded rod. The housing is slidable relative to an attachment of the securement, for securing the securement to an additional object.

US 2016/326738 A1 relates to an anchor particularly adapted to be embedded into a concrete construction for suspension of a ceiling panel, duct or the like. The anchor includes a base which receives inserts that have an axial threaded bore. The base is open at its lower end and can receive a threaded rod by virtue of ratcheting inserts received within the base. The inserts and base are particularly shaped to prevent jam and ease of insertion of the rod in the anchor. The anchor also has a head flange that sits above a plurality of fasteners secured to the anchor which is used to simultaneously drive the fasteners into a form for the concrete member. The fasteners are connected to the anchor extending in generally parallel and spaced relation to the anchor. The fasteners can be held by a support or sleeve-like holder which surrounds at least a portion of the base of the anchor or they can be attached to the base of the anchor. The fasteners project downwardly through the bottom of the anchor for driving into the form board.

US 2015/275505 A1 relates to an internally threaded anchor for use in poured concrete floors having a metal deck or a wood form. The threaded anchor provides quick and easy attachment to threaded support rods that carry racks for utilities, piping, or ceiling grid systems. Each threaded anchor is capable of accepting different diameter rods or bolts with different thread cuts. Each anchor accepts the different diameter threaded rods by a single insertion motion, without the need to thread the rod into the anchor. Full insertion is visually verifiable when the marked end of the rod inserted into the anchor is no longer visible. An authentication tag visible upon full insertion indicates that authorized rod is being used.

US 2020/325924 A1 relates to an anchor system for anchoring objects to a concrete structure after concrete setting. The assembly includes an anchor housing having a threaded opening, a metal decking anchor assembly and a wood form anchor assembly. The wood form and the metal decking anchor assemblies may accommodate the anchor housing and the anchor housing is used in one of the wood form anchor assembly and the metal decking anchor assembly. The metal decking anchor assembly includes a nose-piece and the anchor housing is selectively connectable to the nose-piece via a locking connection such as a bayonet connection.

### SUMMARY

The invention is a device for selectively securing threaded rod of different diameters. In accordance with the present invention, there is provided a device for selectively securing threaded rod of different diameters. Optional and/or preferable features are defined in the dependent claims.

Features which are described in the context of separate aspects and/or embodiments of the invention may be used together and/or be interchangeable wherever possible. Similarly, where features are, for brevity, described in the context of a single embodiment, those features may also be provided separately or in any suitable sub-combination. Features described in connection with the device may have corresponding features definable and/or combinable with respect to a method or vice versa, and these embodiments are specifically envisaged.

### BRIEF DESCRIPTION OF THE DRAWINGS

The accompanying drawings, which are incorporated in and form a part of this specification, illustrate embodiments of the invention and, together with the description, serve to explain the principles of embodiments of the invention, so long as they fall within the scope of the appended claims:
FIG. 1 is a front top right isometric view of a coupler with a threaded rod locking device according to an embodiment of the invention;
FIG. 2 is a cross-sectional view of the coupler of FIG. 1 taken along line II-II of FIG. 1, with the threaded rod locking device in a closed configuration;
FIG. 3 is a cross-sectional view of the coupler of FIG. 1 taken along line III-III of FIG. 1, with the threaded rod locking device in a closed configuration;
FIGS. 4 and 5A are exploded isometric views of a plunger set of the threaded rod locking device in the coupler of FIG. 1 according to an embodiment of the invention;
FIG. 5B is an end view of the plunger set of FIG. 5A in the closed configuration.
FIG. 6 is a front top right isometric view of an assembly of the coupler of FIG. 1 with a first threaded rod threadedly secured by the coupler;
FIGS. 7 through 9 are cross-sectional views of the coupler and the first threaded rod of FIG. 6 taken along line VII-VII of FIG. 6, illustrating various positions of the first threaded rod during installation into the coupler;
FIG. 10 is a cross-sectional view of the assembly of FIG. 6 taken along line X-X of FIG. 6;
FIG. 11A is a cross-sectional view of the assembly of FIG. 6 in a closed configuration, taken along line XI-XI of FIG. 6;
FIG. 11B is a cross-sectional view of the assembly of FIG. 6 in an open configuration, taken along line XI-XI of FIG. 6;
FIG. 12 is a front top right isometric view of an assembly of the coupler of FIG. 1 with a second threaded rod threadedly secured by the coupler;
FIGS. 13 through 15 are cross-sectional views of the assembly of FIG. 12 taken along lines XIII-XIII of FIG. 12 illustrating various positions of the second threaded rod during installation into the coupler;
FIG. 16A is a cross-sectional view of the assembly of FIG. 12 in a closed configuration, taken along line XVI-XVI of FIG. 12;
FIG. 16B is a cross-sectional view of the assembly of FIG. 12 in an open configuration, taken along line XVI-XVI of FIG. 12;
FIG. 17 is a front top right isometric view of an anchor bolt with a threaded rod locking device according to an embodiment of the invention;
FIG. 18 is a cross-sectional view of the anchor bolt of FIG. 17 taken along line XVIII-XVIII of FIG. 17;
FIG. 19 is a cross-sectional view of the anchor bolt of FIG. 17 taken along line XIX-XIX of FIG. 17;
FIG. 20 is a front top right isometric view of a metal-deck anchor with a threaded rod locking device according to an embodiment of the invention;
FIG. 21 is a cross-sectional view of the metal-deck anchor of FIG. 20 taken along line XXI-XXI of FIG. 20;
FIG. 22 is a cross-sectional view of the metal-deck anchor of FIG. 20 taken along line XXII-XXII of FIG. 20;
FIG. 23 is a front top right isometric view of a pre-set anchor, with a threaded rod locking device, in a first configuration and arranged for installation on a wood deck according to an embodiment of the invention;
FIG. 24 is a front top right isometric view of the pre-set anchor of FIG. 23 in a second configuration;
FIG. 25 is a cross-sectional view of the pre-set anchor of FIG. 24 taken along line XXV-XXV of FIG. 24;
FIG. 26 is a cross-sectional view of the pre-set anchor of FIG. 24 taken along line XXVI-XXVI of FIG. 24;
FIG. 27 is a front top right isometric view of a pre-set anchor, with a threaded rod locking device, arranged for installation on a metal pan deck according to an embodiment of the invention;
FIG. 28 is a cross-sectional view of the pre-set anchor of FIG. 27 taken along line XXVIII-XXVIII of FIG. 27; and
FIG. 29 is a cross-sectional view of the pre-set anchor of FIG. 27 taken along line XXIX-XXIX of FIG. 27.

### DETAILED DESCRIPTION

Before any embodiments of the invention are explained in detail, it is to be understood that the invention is not limited in its application to the details of construction and the arrangement of components set forth in the following description or illustrated in the following drawings. The invention is capable of other embodiments and of being practiced or of being carried out in various ways.

The following discussion is presented to enable a person skilled in the art to make and use embodiments of the invention. Various modifications to the illustrated embodiments will be readily apparent to those skilled in the art, and the generic principles herein can be applied to other embodiments and applications without departing from embodiments of the invention, which is defined by the appended claims. Thus, embodiments of the invention are not intended to be limited to embodiments shown, but are to be accorded the widest scope consistent with the principles and features disclosed herein. The following detailed description is to be read with reference to the figures, in which like elements in different figures have like reference numerals. The figures, which are not necessarily to scale, depict selected embodiments and are not intended to limit the scope of embodiments of the invention. Skilled artisans will recognize the examples provided herein have many useful alternatives and fall within the scope of embodiments of the invention.

As noted above, in some contexts, it may be useful to support a threaded rod from a pre-installed anchor or another pre-installed threaded rod for supporting pipes, conduit, or equipment therefrom in construction applications (e.g., multi-story buildings) in which poured concrete is used between floors. The weight and dimensions of some installations can make such overhead work difficult. Therefore, it can be advantageous to do as much of the preparation work on the ground as possible before lifting the object(s) into place to be secured to reduce the amount of overhead work necessary. A threaded rod locking device in an anchor that is configured to quickly receive and secure a threaded rod attached to the object(s) can provide a time saving and strain reducing solution. In some embodiments, the threaded rod locking device can include parts that move within a housing of an anchor that are urged open upon contact with an inserted threaded rod and self-close to engage the threads of the threaded rod for securement of the threaded rod within the anchor. In some embodiments, a threaded rod locking device can have a set of plungers configured to separate to receive a threaded rod therebetween and engage the threads of the inserted threaded rod. In some embodiments, the set of plungers can be biased toward a closed configuration to secure the threaded rod within the anchor.

In some installations, the size of the threaded rod from which objects will be supported may be unknown at the time of installing the anchor. Therefore, having a threaded rod locking device configured to receive two different sizes of threaded rod can be very advantageous. Not only to be better prepared for the eventual installation of the object, but also reduces the number of differently sized anchors an installer needs to keep in stock.

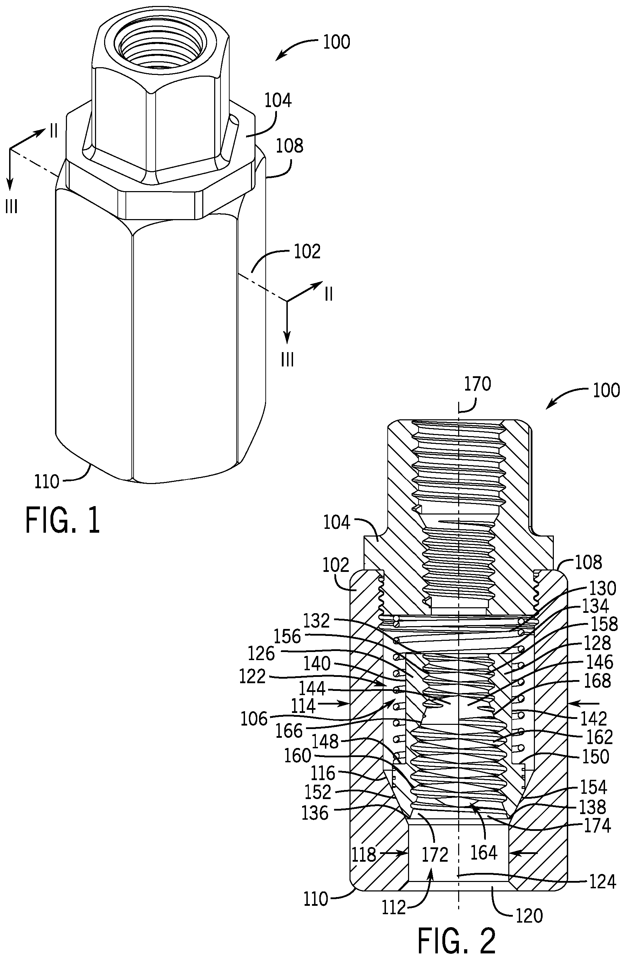

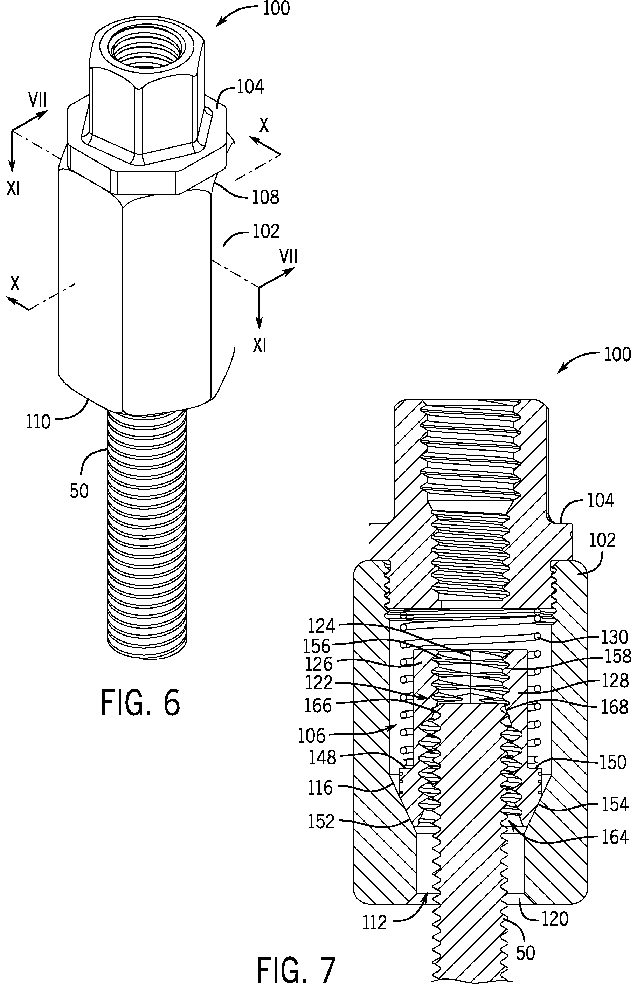

FIGS. 1-3 show a coupler 100 for coupling a pair of threaded rods (e.g., a set of threaded rods like threaded rod 50 shown in FIG. 6). The coupler 100 has a housing 102, a back plate 104 (here shown as a threaded nipple), and a threaded rod locking device 106. The housing 102 includes a first end 108, a second end 110, and an internal bore 112 extending between first and second bore ends (e.g., extending from the first end 108 to the second end 110 in the example shown). The internal bore 112 has a first diameter 114 adjacent the first end 108, which remains constant as the internal bore 112 extends toward the second end 110. Adjacent the second end 110, the internal bore 112 has a tapered section 116, which tapers inward from the first diameter 114 to a second diameter 118 to an opening 120.

Continuing, the threaded rod locking device 106 is shown with a plunger 122 and a spring 130 or other known biasing member (e.g., elastomer bodies, integral prong structures, etc.). The plunger 122 is split along a split plane 124 to provide separate first and second plunger bodies, which may be separate plunger halves 126, 128, as shown (e.g., substantially identical halves, as shown, separated by corresponding split lines on opposing sides of the plunger 122). The plunger halves 126, 128 are received together within the internal bore 112 to collectively define a passage 164 to receive threaded rods (as further discussed below). Thus received, the plunger 122 is configured to move within the internal bore 112 of the housing between open and closed configurations (e.g., as shown in FIGS. 7-9) to receive and secure a threaded rod (e.g., the threaded rod 50) in the coupler 100, respectively. In particular, as further detailed below, the plunger 122 can be moved against the bias of the spring 130 to separate the plunger halves 126, 128 and thereby axially (translationally) receive a selected threaded rod of any of multiple diameters. Conversely, the plunger 122 can move with the bias of the spring 130 or, generally, in an axial loading direction, to threadedly engage and thus securely, but adjustably, grip a threaded rod of selected diameter within the plunger passage.

Each of the first and second plunger halves 126, 128, individually, can have a first end 132, 134 and a second end 136, 138 and can be formed to have a semi-annular cross-sectional shape defining an outer arcuate surface 140, 142 and an inner arcuate surface 144, 146, extending along exterior and interior sides of the internal bore 112, respectively. Toward the second end 136, 138 (e.g., more than halfway along the internal bore), a ledge section 148, 150 can extend radially outward from the outer arcuate surface 140, 142. Additionally, an outer tapered section 152, 154 is provided that tapers inward from the ledge section 148, 150 to the second end 136, 138.

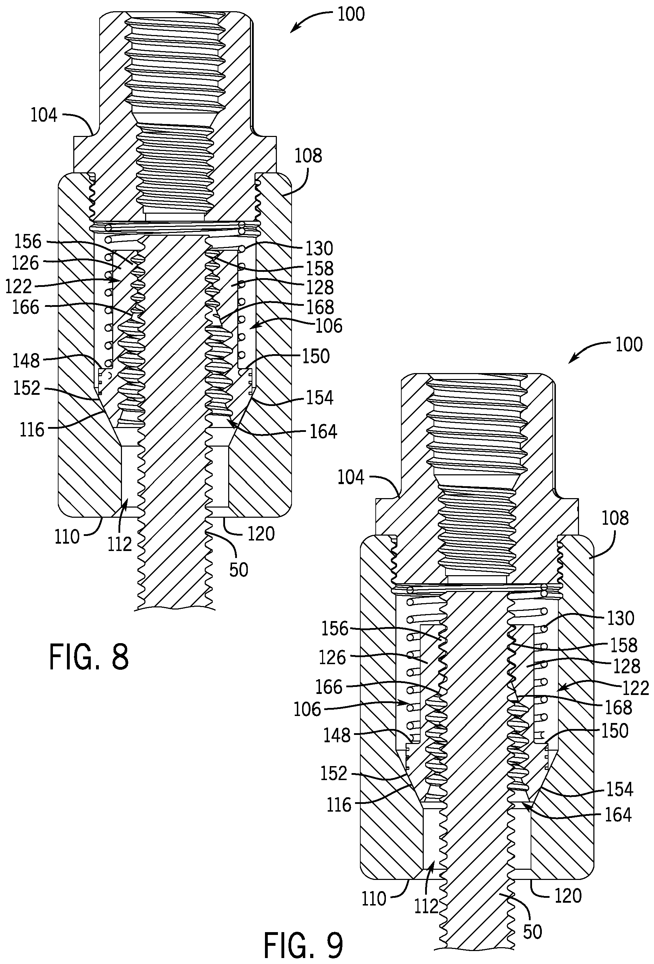

Continuing, the inner arcuate surface 144, 146 includes a first threaded section 156, 158 adjacent the first end 132, 134 and a second threaded section 160, 162 adjacent the second end 136, 138. With the first and second plunger halves 126, 128 in a closed position (e.g., as shown in FIG. 9) the first threaded sections 156, 158 can be sized to secure within the passage 164 a threaded rod of a different size than the second threaded sections 160, 162. For example, the first threaded sections 156, 158 can be sized to collectively receive a 6.35 millimetre (¼) threaded rod and the second threaded sections 160, 162 can be sized to collectively receive a 9.53 millimetre (3/8") threaded rod. Other example combinations of the first threaded sections 156, 158 and the second threaded sections 160, 162 can include 9.53 millimetre (3/8") and 12.7 millimetre (½"); 12.7 millimetre (½") and 15.88 millimetre (5/8"); and 15.88 millimetre (5/8") and 19.05 millimetre (¾"). Other combinations are also contemplated.

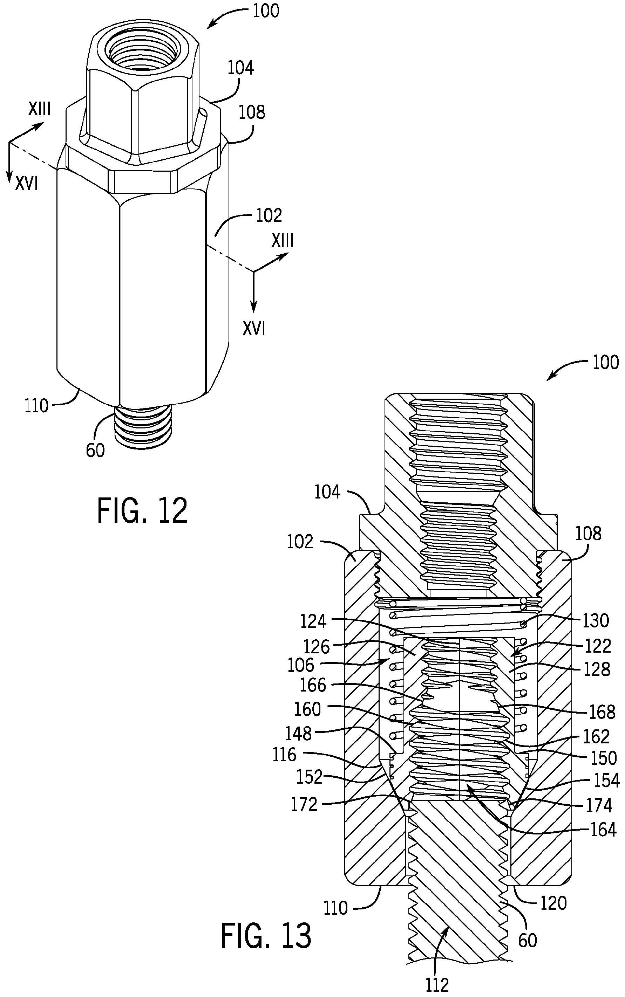

The inner arcuate surface 144, 146 can also include a first chamfer 166, 168 or other taper between the first threaded section 156, 158 and the second threaded section 160, 162 to provide a transition therebetween to provide a guide for a smaller threaded rod into the first threaded section 156, 158 or to act as a stop to prevent a larger threaded rod from entering the first threaded section 156, 158. It is contemplated that the first chamfer 166, 168 can be disposed at an angle of about 20 degrees from a central axis 170 extending through the plunger 122. It is further contemplated that the first chamfer 166, 168 can include a partial thread to allow for smoother engagement of a threaded rod (e.g., the threaded rod 50 shown in FIG. 7) with the threads of the first threaded sections 156, 158. A second chamfer 172, 174 or other taper can also be provided at the second end 136, 138, at an entrance to the passage 164, to aid in guiding a threaded rod into the plunger 122. Similarly, the second chamfer 172, 174 can be disposed at an angle of about 20 degrees from the central axis 170. Also similarly, the second chamfer 172, 174 can include a partial thread to allow for smoother engagement of a threaded rod (e.g., the threaded rod 60 shown in FIG. 13) with the threads of the second threaded sections 160, 162.

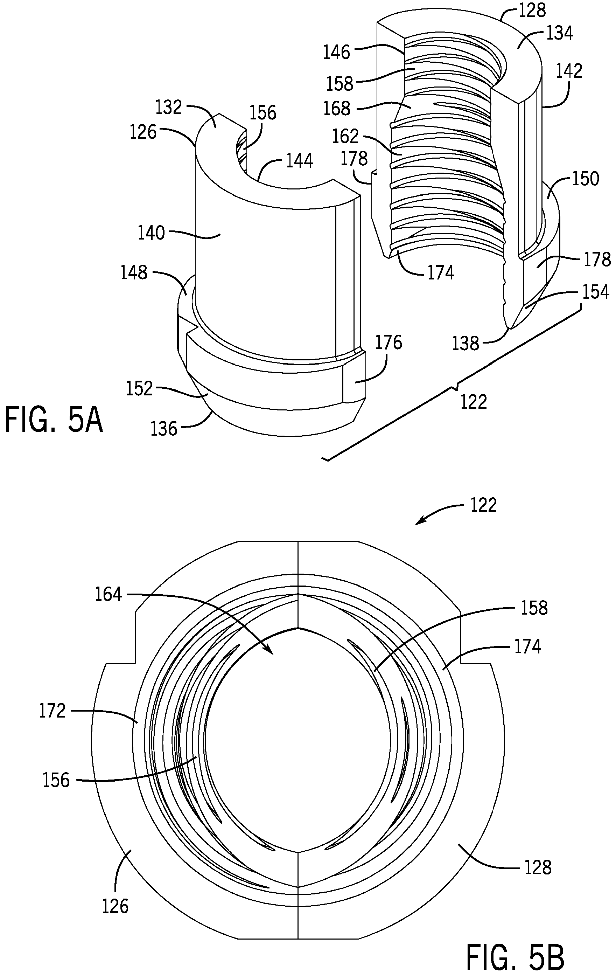

In particular, in some examples, the second chamfer 172, 174 can define a circular cross-section (and corresponding circular conical section overall) when the plunger 122 is in the closed configuration (see, e.g., FIG. 5B). Thus, for example, initial insertion of a threaded rod can easily move the plunger 122 from the closed configuration toward the open configuration without binding because the plunger 122 can translate uniformly along the full chamfered circumference to urge the plunger halves 126, 128 axially into the housing 102 and radially apart from each other. In contrast, the non-circular cross-section of the passage 164 at the entrance to the first threaded sections 156, 158 can also allow for significantly smoother insertion of a threaded rod, including because a tapered thread depth (as further detailed below) can help to prevent binding of the threads of the plunger 122 with the threads of the rod.

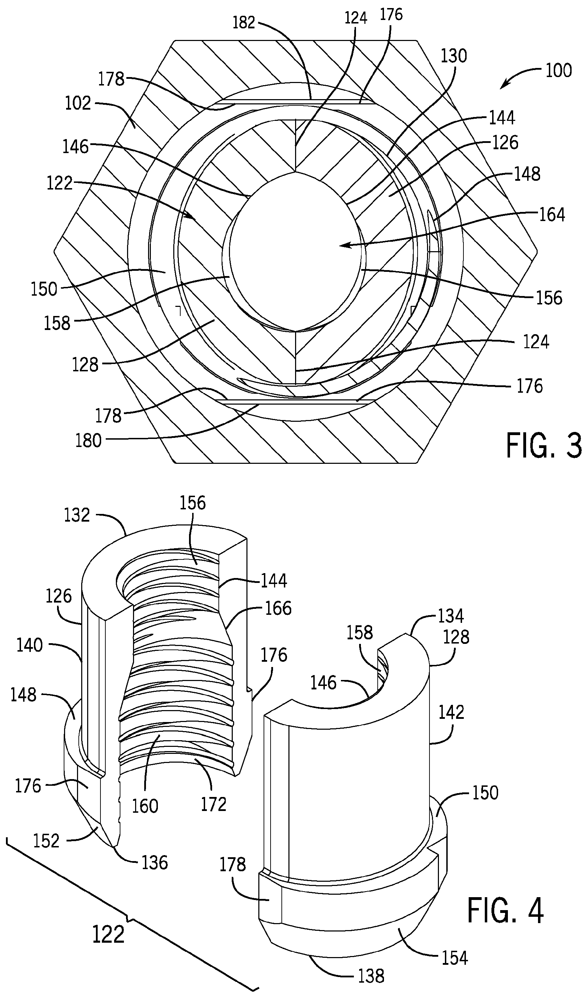

As generally noted above, the threads of the first threaded sections 156, 158 and the second threaded sections 160, 162 can be configured to change in depth along the inner arcuate surface 144, 146 (e.g., continuously along a circumference of the corresponding threads, in some cases). For example, in an embodiment not covered by the invention, as shown in FIGS. 3-5B, the threads can transition from a deepest depth at a point along the inner arcuate surface 144, 146 farthest from the split plane 124 to shallowest depth adjacent the split plane 124. The threaded sections 156, 158 provide areas of zero thread depth (i.e., threadless areas) adjacent to the split plane 124. As shown in FIG. 3, the reduction in thread depth can be accomplished by reducing the peaks of the threads down to the valley of the threads and can provide an area with no threads at the split plane 124. Therefore, the inner diameter of the passage 164 is largest at the split plane 124.

Thus, generally, with a plunger in a closed configuration, the female threads of a threaded section of the plunger may define a major thread diameter (i.e., a width of the passage measured at the roots of the threads, perpendicular to the split plane, and through the central axis) that is substantially equal to a major thread diameter of the male threads of the corresponding threaded rod (i.e., a diameter of the rod measured at the crests of the threads). Correspondingly, the roots of the threads of the plunger may define a circular cross-section when the plunger is in a closed configuration to allow easy rotational adjustment of the threaded rod. At the same time, the plunger threads generally define a minor thread diameter (i.e., a diameter of the between the crests of the threads, perpendicular to the split plane, and through the central axis) that is smaller than the major thread diameter of the threaded rod and thus extend into threaded engagement with the thread rod to secure the threaded rod against axial movement. However, due to the variation in thread depth, the threads of the plunger may define a non-circular (e.g., ovular) cross-section when the plungers are in the closed configuration. Thus, around the inner circumference of the plunger passage, the plunger thread may generally extend by varied depths into engagement the threads of the rod (e.g., ranging from full depth in alignment with the major and minor thread diameters as defined above, to zero depth at the split plane).

In contrast, with the plunger in an open configuration, the female threads of the threaded section of the plunger may define a major thread diameter that is larger than the major thread diameter of the male threads of the threaded rod (e.g., larger by at least the maximum thread depth of the female threads). Thus, the roots of the threads of the plunger may define a non-circular (e.g., ovular) cross-section. Further, the plunger threads may also define a minor thread diameter that is at least as large as the major thread diameter of the threaded rod, so that the threaded rod can slide past the crests of the plunger threads to translate toward an installed position. Correspondingly, with the plunger in the open configuration, as the thread crests of the threaded rod slide past the thread crests of the plunger, the crests of the threads of the plunger can define a circular cross-section. In this regard, for example, an open configuration for a first threaded rod diameter may correspond to a different spacing between plunger bodies - and different major and minor thread diameters - than an open configuration for a second, different threaded rod diameter.

In some examples, with the plunger 122 in a closed configuration as shown in FIG. 3, with the plunger halves 126, 128 seated against each other, this configuration can provide the passage 164 with a generally oblong shape as viewed along an axial direction thereof. For example, the illustrated configuration provides a cross-section with a particular pointed oval or lanceolate shape, although other configurations are possible. Generally, use of threaded sections to provide oblong and circular cross-sectional shapes at closed and open configurations, respectively, can allow for improve smoothness of insertion as well as improved overall engagement for threaded rods of multiple diameters.

In FIG. 2, the combination of the threaded rod locking device 106, the housing 102, and the back plate 104 is shown. The threaded rod locking device 106 is positioned within the internal bore 112 of the housing 102 with the spring 130 biased between the back plate 104 and the ledge sections 148, 150 of the first and second plunger halves 126, 128. The spring 130 is therefore arranged external to and surrounding at least a portion of the plunger 122.

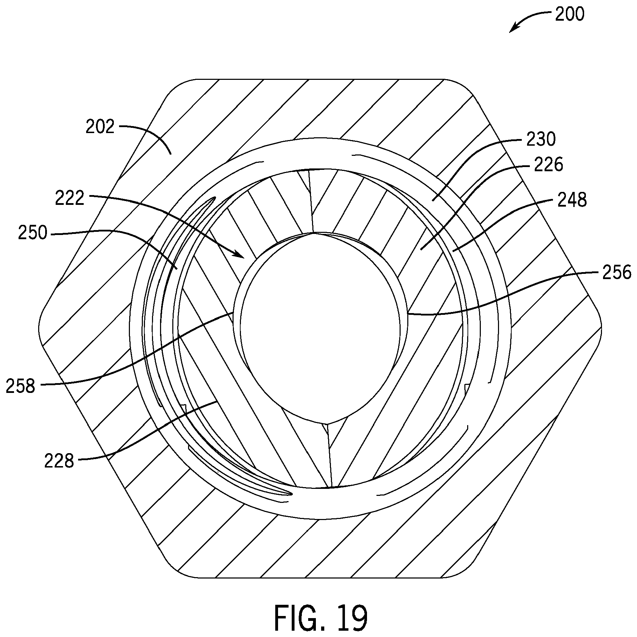

As shown in FIG. 3, in the closed configuration, the outer periphery of the combined first and second plunger halves 126, 128, at the area around which the spring 130 is positioned (e.g., extending from an end opposite the entrance into the housing 102), has an ovular shape as viewed along the axial direction of the passage 164, with the long dimension (or major diameter) at the split plane. As discussed further below, when transitioning from the closed configuration to the open configuration, the first and second plunger halves 126, 128 move axially (e.g., upward) in the internal bore 112 and radially away from each other to accept a threaded rod therebetween (e.g., the threaded rod 50 shown in FIG. 6). The shape of the combined outer peripheries of the first and second plunger halves 126, 128 permits this described movement of the first and second plunger halves 126, 128 during the transition from the closed configuration to the open configuration without interfering with the spring 130. Further, in some examples, the spring 130 or other circular biasing element can also thus engage firmly with the outer (e.g., circular) periphery of the plunger 122 in the (maximum-diameter) open configuration, to prevent over-separation of the plunger halves 126, 128 or underside splaying of the plunger halves 126, 128 away from each other. FIG. 19 also provides a view of the non-circular shape of the outer periphery of a plunger 222 in a closed position.

Continuing with reference to FIG. 2, second ends 136, 138 of the first and second plunger halves 126, 128 are positioned within the tapered section 116 of the internal bore 112. In particular, the slope of the tapered sections 152, 154 of the first and second plunger halves 126, 128 can be the same as the slope of the tapered section 116 of the housing 102, but the inverse. Further, in the closed configuration the combined outer peripheries along the tapered sections 152, 154 of the first and second plunger halves 126, 128 are configured to provide a circular cross-section at the tapered sections 152, 154 to match the circular cross-section of the tapered section 116 of the housing 102. The similarly circular cross-sections of the tapered sections 152, 154 of the plunger 122 and the tapered section 116 of the housing 102 provide contact therebetween along the entire surfaces thereof to better secure a threaded rod (e.g., the threaded rod 50 shown in FIG. 6) within the coupler 100.

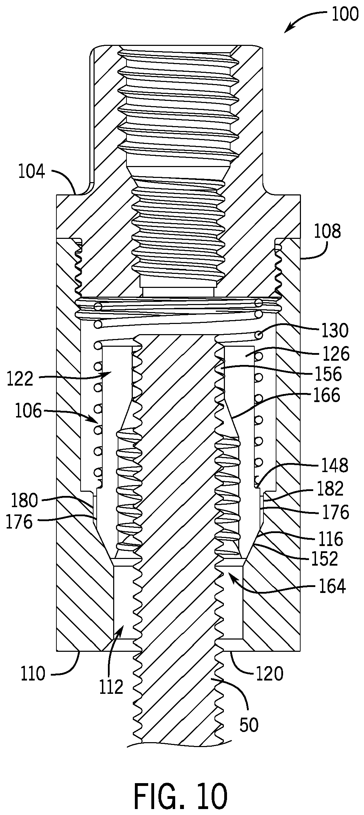

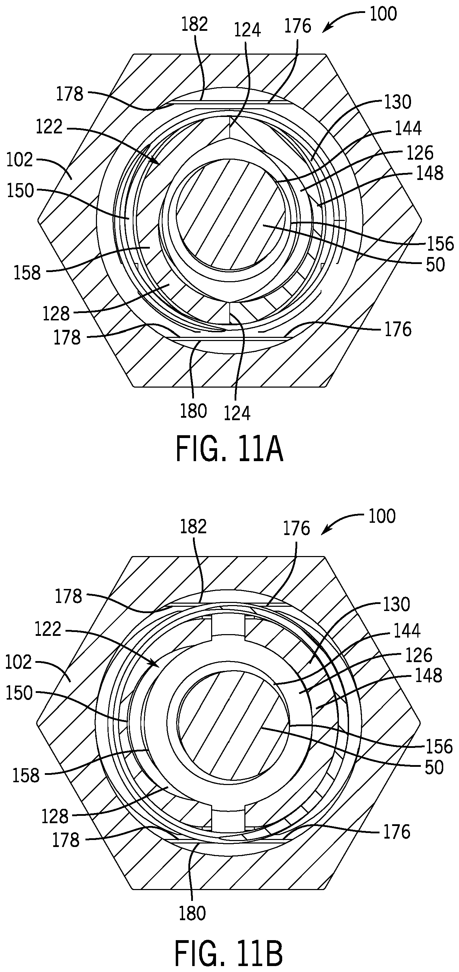

In some cases, as shown in FIGS. 10 and 11, the ledge section 148, 150 can include one half of a key system formed therein. For example, as shown, a set of flat spots 176, 178 are formed in the ledge sections 148, 150 of each of the first and second plunger half 126, 128, respectively, which are arranged to sit adjacent cooperative first and second protrusions 180, 182 (or other flat spots) in the internal bore 112 of the housing 102 to prevent the plunger 122 from spinning within the housing 102 when a threaded rod (e.g., the threaded rod 50) is rotated within the plunger 122.

FIGS. 6-11B illustrate an example installation of the threaded rod 50 into the coupler 100. In the example showing the coupler 100 and threaded rod 50, the first threaded sections 156, 158 are sized when combined to receive a 9.53 millimetre (3/8") threaded rod and the second threaded sections 160, 162 are sized when combined to receive a 12.7 millimetre (1/2") threaded rod and the threaded rod 50 is a 9.53 millimetre (3/8") threaded rod. In this regard, FIG. 6 is provided as a reference drawing of the threaded rod 50 and the coupler 100 to illustrate the orientation of the respective cross-sectional views shown in FIGS. 7-11, but is not necessarily accurate as to the actual position of the threaded rod 50 within the coupler 100 as shown in some of the cross-sectional views (which collectively illustrated axial translation of the rod 50 within the coupler 100).

As shown in FIG. 7, the threaded rod 50 is inserted through the opening 120 of the housing 102 in an axial direction, through the second threaded sections 160, 162 of the plunger 122, and contacting the first chamfers 166, 168. Continued pushing of the threaded rod 50 into the first chamfers 166, 168 with an insertion force large enough to overcome the bias force of the spring 130 urges the first and second plunger halves 126, 128 toward the back plate 104 and outward away from the central axis 170 (e.g., due to the angled engagement of the rod and plunger threads). Accordingly, translational insertion of the threaded rod 50 places the threaded rod locking device 106 into the open configuration to allow clearance for the threaded rod 50 to enter the first threaded sections 156, 158, as illustrated in FIG. 8. Thus, the first threaded sections 156, 158 can slidingly engage the threaded rod 50, so that the threaded rod 50 can be translated (e.g., without rotation) along the passage 164.

In particular, in the open configuration, the first and second plunger halves 126, 128 can be moved away from each other in opposite directions perpendicular to the split plane 124, and the shape of the passage 164 at the first threaded sections 156, 158, as viewed in the axial direction, can correspondingly convert from a pointed oval or other ovular shape to a circular shape (e.g., to extend along arcs of a circle with an internal diameter substantially equal to an outer diameter of the threaded rod 50). The threaded rod 50 can be inserted as far as contacting the back plate 104, in some cases.

The noted reduction in thread depth along the threaded sections and, for example, the absence of threads in the area of the split plane 124 in particular, allows the threaded rod 50 to be inserted into the passage 164 without the substantial interference that would be encountered if the threads in the first threaded sections 156, 158 maintained a continuous depth along the entire respective inner arcuate surfaces 144, 146. Thus, for example, threaded rods can be easily inserted into engagement with the coupler 100 even at relatively large installation distances (e.g., to hang rod from relatively high ceilings), in contrast to various conventional designs.

Continuing, FIGS. 9-11A provide views of the threaded rod locking device 106 returned to the closed configuration to secure the threaded rod 50 within the coupler 100. Removing the insertion force previously applied to the threaded rod 50 permits the bias force of the spring 130 (e.g., acting between the back plate 104 and the ledge sections 148, 150) or a corresponding axial loading of the rod 50 to urge the first and second plunger halves 126, 128 back downward toward the second end 110 of the housing 102. The tapered sections 152, 154 on the outer arcuate surface 140, 142 of the first and second plunger halves 126, 128 correspondingly translate along the tapered section 116 of the housing 102 to move the first and second plunger halves 126, 128 back toward the central axis 170 and back toward the closed configuration, so that the first threaded sections 156, 158 engage with the threads of the threaded rod 50.

In particular, as shown in FIG. 11, due to the ovular cross-section provided by the first threaded sections 156, 158, the corresponding threads may engage the threaded rod 50 over only part of the circumference of the threaded rod and of the threaded sections 160, 162. In contrast, in the open configuration of FIGS. 8 and 11B, the threaded sections 156, 158 may contact the threaded rod 50 along a full circumferential extent of the thread of the sections 156, 158 and the corresponding circular arcs of the circular cross-section of the passage (but not over the gap between the spaced-apart plunger halves 126, 128 or at any threadless sections).

Generally, the configuration and orientation of the interface between the tapered sections 152, 154 of the first and second plunger halves 126, 128 and the tapered section 116 of the housing 102 encourage movement of the first and second plunger halves 126, 128 toward the central axis 170. Further, the bias force provided by the spring 130 correspondingly maintains the engagement of the threads to prevent removal of the threaded rod 50 from the coupler 100 via a force applied to the threaded rod 50 in a direction opposite the insertion force. However, even in the closed configuration the threaded engagement can still permit rotation of the threaded rod 50 in either a clockwise or counter-clockwise direction.

Continuing with the example coupler 100 described above, FIGS. 12-16B depict the installation of a larger threaded rod 60 (e.g., a 12.7 millimetre (1/2") threaded rod) into the coupler 100. FIG. 12 is provided as a reference drawing of the threaded rod 60 and the coupler 100 to illustrate the orientation of the respective cross-sectional views shown in FIGS. 13-16, but is not necessarily accurate as to the actual position of the threaded rod 60 within the coupler 100 as shown in some of the cross-sectional views (which collectively illustrated axial translation of the rod 60 within the coupler 100).

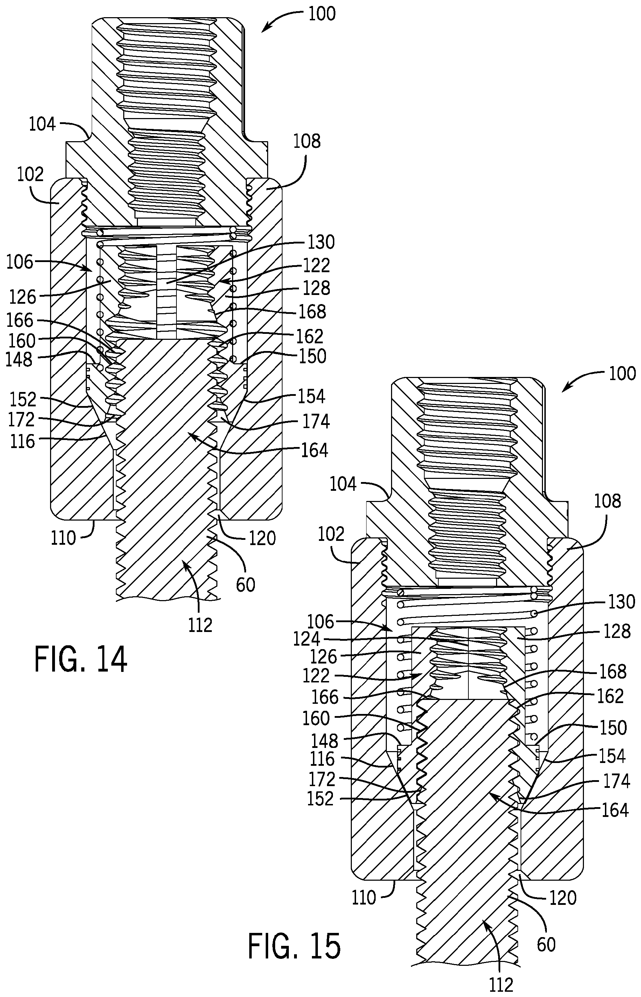

As shown in FIG. 13, the threaded rod 60 can be inserted through the opening 120 of the housing 102 to contact the second chamfers 172, 174 of the first and second plunger halves 126, 128. Continued pushing of the threaded rod 60 into the second chamfers 172, 174 with an insertion force large enough to overcome the bias force of the spring 130 urges the first and second plunger halves 126, 128 toward the back plate 104 and outward away from the central axis 170 170 (e.g., due to the angled engagement of the rod and plunger threads). Accordingly, translational insertion of the threaded rod 60 places the threaded rod locking device 106 into the open configuration to allow clearance for the threaded rod 60 to enter the second threaded sections 160, 162 as illustrated in FIG. 14. Thus, the second threaded sections 160, 162 can slidingly engage the threaded rod 60, so that the threaded rod 60 can be translated (e.g., without rotation) along the passage 164.

As similarly described above relative to FIGS. 6-11, as the plunger 122 moves from the closed configuration to the open configuration, the shape of the passage 164, as viewed in the axial direction at the second threaded sections 160, 162, converts from having a pointed oval or other ovular shape to a circular chape (e.g., to extend along arcs of a circle with an internal diameter substantially equal to an outer diameter of the threaded rod 60). Similar to the first threaded sections 156, 158 discussed above, the absence of threads in the area of the split plane 124 of the second threaded sections 160, 162, the threaded rod 60 can be inserted more easily into the passage 164. In particular, in some cases, the threaded rod 60 can be inserted as far as contacting the first chamfers 166, 168.

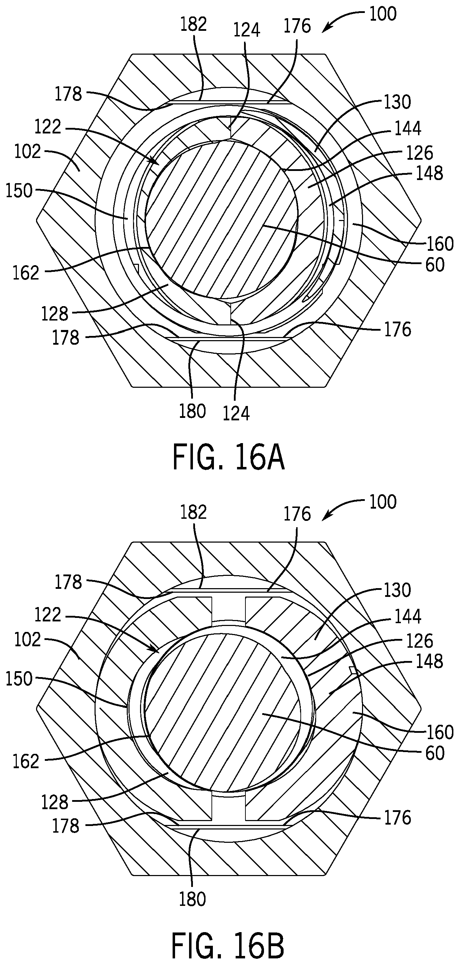

Continuing, FIGS. 15 and 16A provide views of the threaded rod locking device 106 returned to the closed configuration to secure the threaded rod 60 within the coupler 100. As also similarly discussed above, removing the insertion force previously applied to the threaded rod 60 permits the bias force of the spring 130 (e.g., acting between the back plate 104 and the ledge sections 148, 150) or a corresponding axial loading of the rod 60 to urge the first and second plunger halves 126, 128 back downward toward the second end 110 of the housing 102. The tapered sections 152, 154 on the outer arcuate surface 140, 142 of the first and second plunger halves 126, 128 correspondingly translate along the tapered section 116 of the housing 102 to move the first and second plunger halves 126, 128 back toward the central axis 170 and back toward the closed configuration, in which the second threaded sections 160, 162 engage with the threads of the threaded rod 60.

In particular, as shown in FIG. 16, due to the ovular cross-section provided by the threaded sections 160, 162, the corresponding threads may engage the threaded rod 60 over only part of the circumference of the threaded rod and of the threaded sections 160, 162. In contrast, in the open configuration of FIGS. 14 and 16B, the threaded sections 160, 162 may contact the threaded rod 60 along a full circumferential extent of the thread of the sections 160, 162 and the corresponding circular arcs of the circular cross-section of the passage (but not over the gap between the spaced-apart plunger halves 126, 128 or over any threadless sections).

Again, the configuration and orientation of the interface between the tapered sections 152, 154 of the first and second plunger halves 126, 128 and the tapered section 116 of the housing 102 generally encourage movement of the first and second plunger halves 126, 128 toward the central axis 170. Further, the bias force provided by the spring 130 correspondingly maintains the engagement of the threads to prevent removal of the threaded rod 60 from the coupler 100 via a force applied to the threaded rod 60 in a direction opposite the insertion force. However, even in the closed configuration, the threaded engagement can still permit rotation of the threaded rod 50 in either a clockwise or counter-clockwise direction.

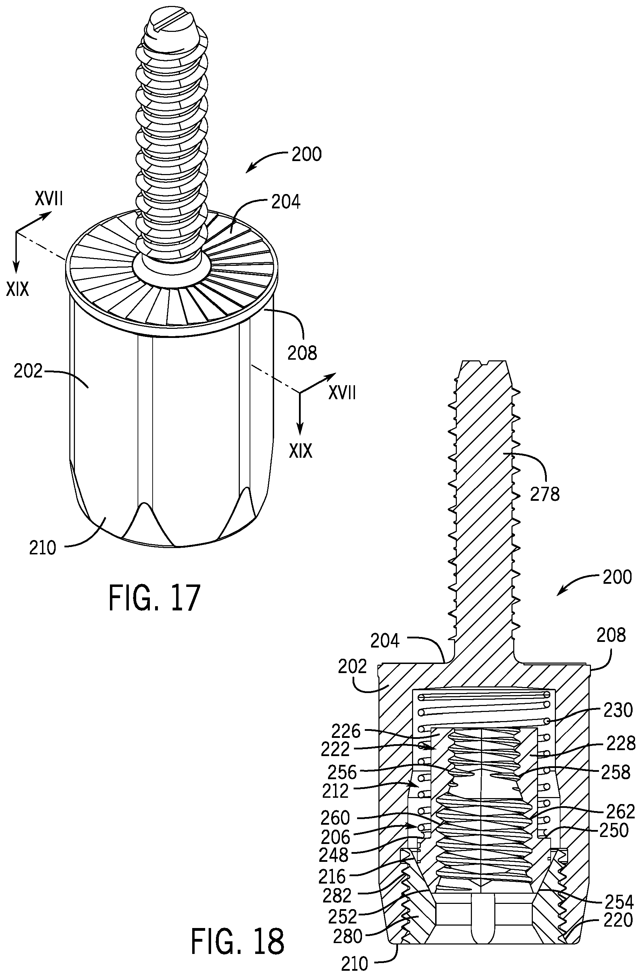

FIGS. 17-19 illustrate an embodiment of an anchor bolt 200, according to the invention, as also can be equipped with a threaded rod locking device 206. The anchor bolt 200 can be configured to be installed within a structure (e.g., a concrete structure) after the concrete has hardened to a point in which a hole can be drilled and an anchor installed. In many aspects, the anchor bolt 200 is similar to the coupler 100 described above. Correspondingly, similar numbering in the 200 series is used for the anchor bolt 200 and discussion of similarly numbered or names components relative to the coupler 100 also apply to the anchor bolt 200, and vice versa, unless otherwise noted or required. For example, the anchor bolt 200 includes a housing 202, a back plate 204, and the threaded rod locking device 206. The housing 202 has a first end 208, a second end 210 with an opening 220, and an internal bore 212. Further, the threaded rod locking device 206 has the plunger 222 and a spring 230. The plunger 222 includes a first plunger half 226 and a second plunger half 228, each with a ledge section 248, 250; a tapered section 252, 254; a first threaded section 256, 258; and a second threaded section 260, 262 and is configured to receive and secure a threaded rod (e.g., the threaded rod 50 shown in FIG. 6) by pushing the threaded rod into the threaded rod locking device 206.

In some aspects, however, the coupler 100 and the anchor bolt 200 differ from each other. For example, the anchor bolt 200 includes a threaded stud 278 extending from the back plate 204 in a direction opposite from the opening 220 of the housing 202 and a threaded insert 280. The threaded stud 278 is configured to secure and support the anchor bolt 200 to a structure. The threaded insert 280 is threadedly received by internal threads 282 provided in the opening 220 in the second end 210 of the housing 202. With the threaded insert 280 removed, the threaded rod locking device 206 can be installed within the internal bore 212 of the housing 202. As shown, the threaded insert 280 includes the tapered section 216, which interfaces with the tapered sections 252, 254 of the first and second plunger halves 226, 228, respectively. Further, as can be seen in FIG. 19, the anchor bolt 200 does not include any key features to prevent the threaded rod locking device 206 from freely rotating within the housing 202. Removing this feature can help prevent unintentional removal of the threaded insert 280 when adjusting a threaded rod (e.g., the threaded rod 50 shown in FIG. 6) within the threaded rod locking device 206.

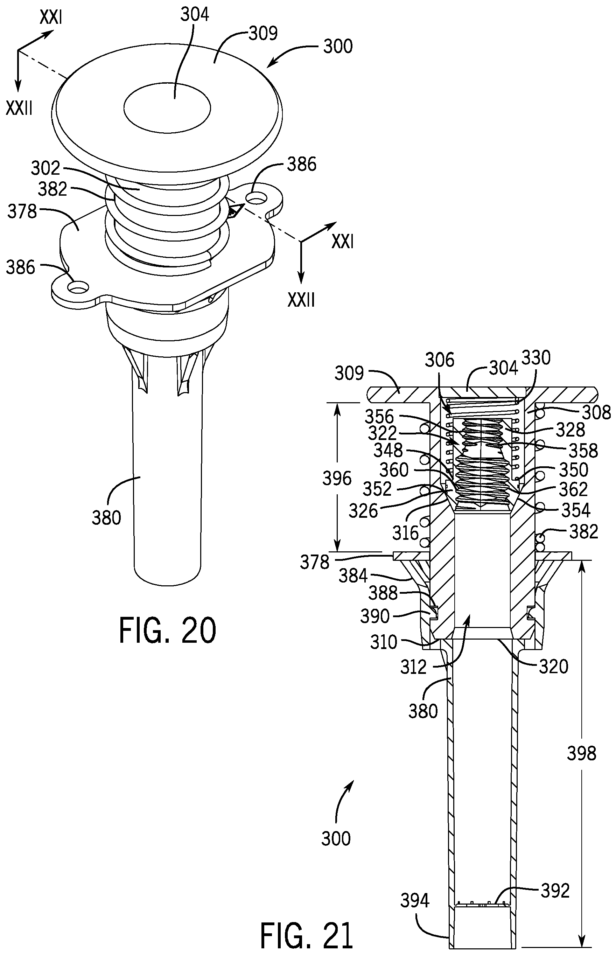

FIGS. 20-22 illustrate an embodiment of a pre-set concrete anchor 300, according to the invention, as also can be equipped with a threaded rod locking device 306. The pre-set concrete anchor 300 can be configured to be installed within a structure (e.g., a metal deck) prior to concrete being poured thereon. In many aspects, the pre-set concrete anchor 300 is similar to the coupler 100 described above. Correspondingly, similar numbering in the 300 series is used for the pre-set concrete anchor 300 and discussion of similarly numbered or names components relative to the coupler 100 also apply to the anchor 300, and vice versa, unless otherwise noted or required. For example, the pre-set concrete anchor 300 includes a housing 302, a back plate 304, and the threaded rod locking device 306. The housing 302 has a first end 308, a second end 310 with an opening 320, and an internal bore 312 with a tapered section 316. Further, the threaded rod locking device 306 has a plunger 322 and a spring 330. The plunger 322 includes a first plunger half 326 and a second plunger half 328, each with a ledge section 348, 350; a tapered section 352, 354; a first threaded section 356, 358; and a second threaded section 360, 362 and is configured to receive and secure a threaded rod (e.g., the threaded rod 50 shown in FIG. 6) by pushing the threaded rod into the threaded rod locking device 306.

In some aspects, however, the coupler 100 and the pre-set concrete anchor 300 differ from each other. For example, the pre-set concrete anchor 300 further includes a flange 309 extending radially outwardly from the housing 302 at the first end 308, a holding plate 378, a tube 380, and a holding spring 382 arranged external to and circumjacent the housing 302 and extending between the flange 309 and the holding plate 378 to bias the holding plate 378 against a plurality of holding fingers 384 extending upward and outward from the tube 380. In some embodiments, the tube 380 can be formed from plastic and the plurality of holding fingers 384 can be integrally formed with the tube 380.

In some installation configurations, the pre-set concrete anchor 300 can be installed through a plateau section of a metal deck. The tube 380 can be inserted through a hole (e.g., a 31.75 millimetre (1.25") diameter hole) in the metal deck, with the holding fingers 384 being configured to bend inwards to pass through the hole and rebound outward to contact an underside of the metal deck. The holding plate 378 is then positioned against the topside of the metal deck, opposite the holding fingers 384. The metal deck is therefore captured between the holding fingers 384 and the holding plate 378. This arrangement is maintained by the holding spring 382 applying a biasing force between the flange 309 and the holding plate 378. The holding plate 378 can include a set of holes 386 through which fasteners can be received to secure the holding plate 378 to the metal deck.

In some installation configurations, the pre-set concrete anchor 300 can be similarly installed on strip secured between a pair of adjacent plateau sections of the metal deck, wherein the strip is captured between the holding fingers 384 and the holding plate 378 and the tube 380 extends through a hole in a valley of the metal deck.

The housing 302 also includes a groove 388 extending around outer a periphery thereof configured to receive a tongue 390 extending around an inner surface of the tube 380. The interface of the tongue 390 and the groove 388 is configured to maintain the connection of the tube 380 and the housing 302 against the biasing force of the holding spring 382 prior to installation in the metal deck, for example.

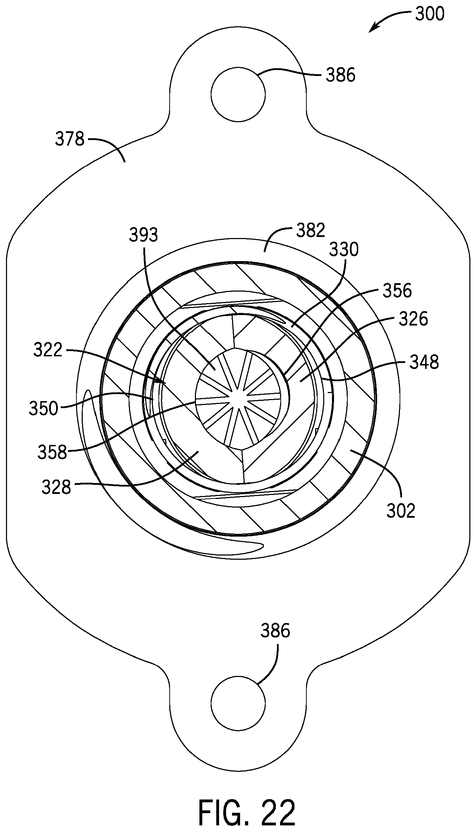

In some embodiments, the tube 380 can include a barrier 392 therein adjacent a bottom end 394 thereof. The barrier 392 can be configured to protect against debris from entering the tube 380 during construction, for example, during an application of a spray coating insulation to the metal deck, which can occur prior to the insertion and securement of a threaded rod (e.g., the threaded rod 50 shown in FIG. 6) within the pre-set concrete anchor 300. The barrier 392 can also be configured to be flexible to allow passage of the threaded rod into the tube 380. For example, the barrier 392 can comprise a plurality of fins 393, as shown in FIG. 22, that are spaced apart and capable of flexing independently of each other to allow a threaded rod (e.g., the threaded rod 50 shown in FIG. 6) to pass through but prevent debris from entering. In some embodiments, the tube 380 can be formed from plastic and the barrier 392 can be integrally formed with the tube 380.

Additionally, a top distance 396 is defined from a top surface of the housing 302 at the first end 308 to a bottom surface of the holding plate 378. In some embodiments, the top distance 396 can be about 41.91 millimetre (1.65"). Further, a bottom distance 398 is defined from a top surface of the holding fingers 384 and a bottom surface of the tube 380. In some embodiments, the bottom distance 398 can be about 93.98 millimetre (3.7").

In some examples, the back plate 304 of the anchor 300 may be secured to the flange 309 via staking. For example, the back plate 304 may be arranged on the flange 309 and then staked to the flange 309. Following this, a sticker (e.g., adhesive sticker, etc.) may be placed over the back plate 304 and the flange 309 in order to further prevent access to the back plate 304. Further, in some examples, this configuration may provide a watertight arrangement for the anchor. As should be appreciated, this back plate configuration described above (e.g., the staked configuration) may be utilized with any of the examples described herein, or various other attachment techniques known in the art may be employed.

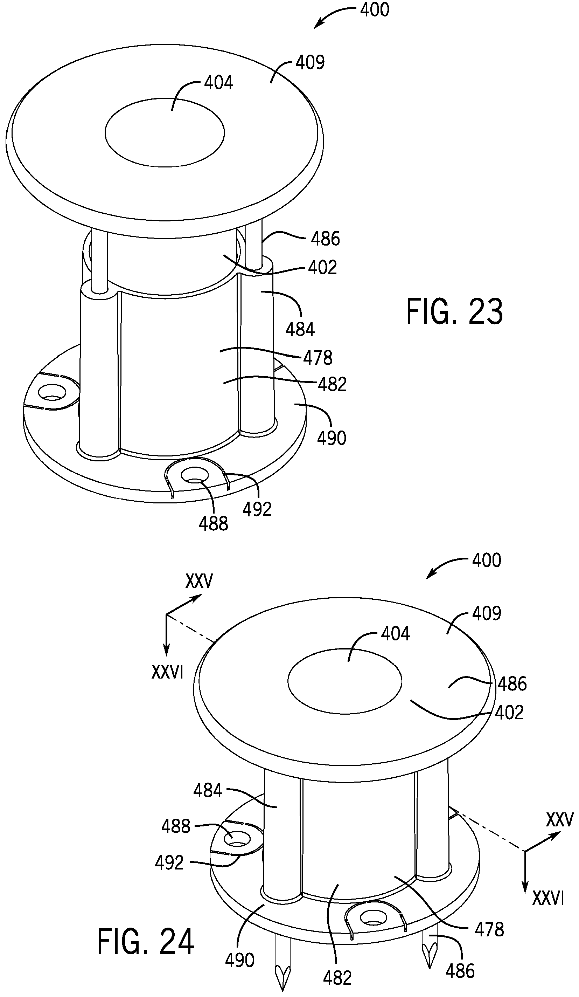

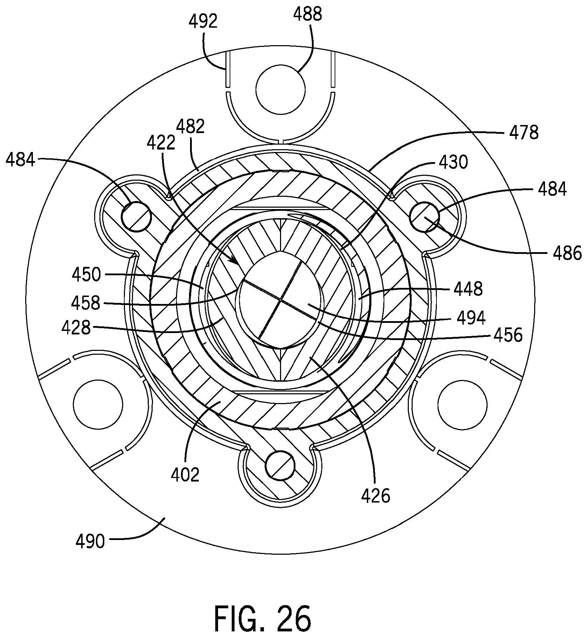

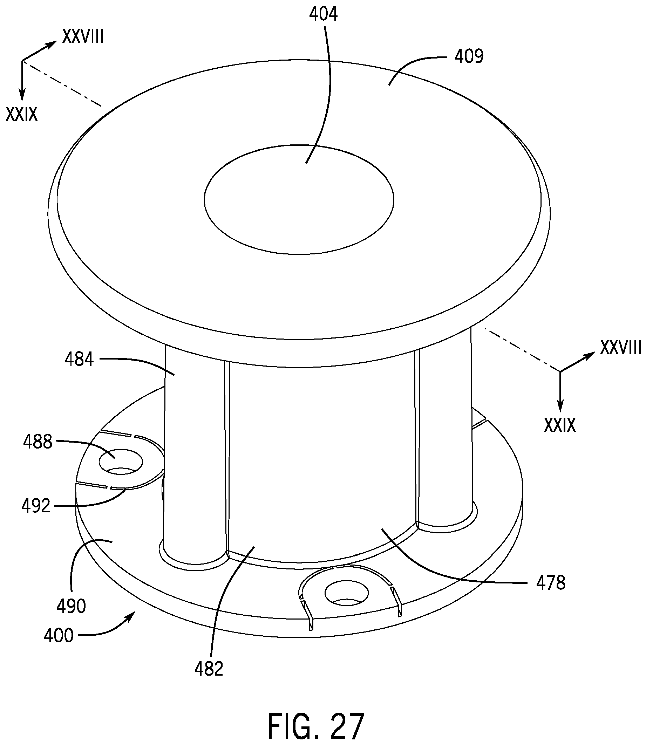

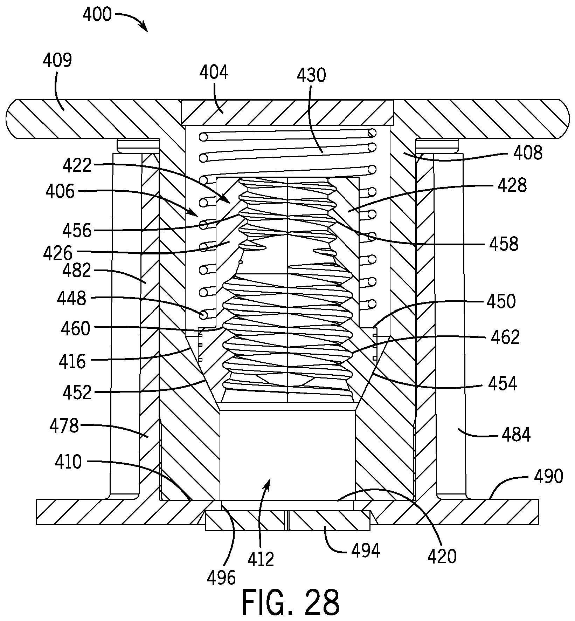

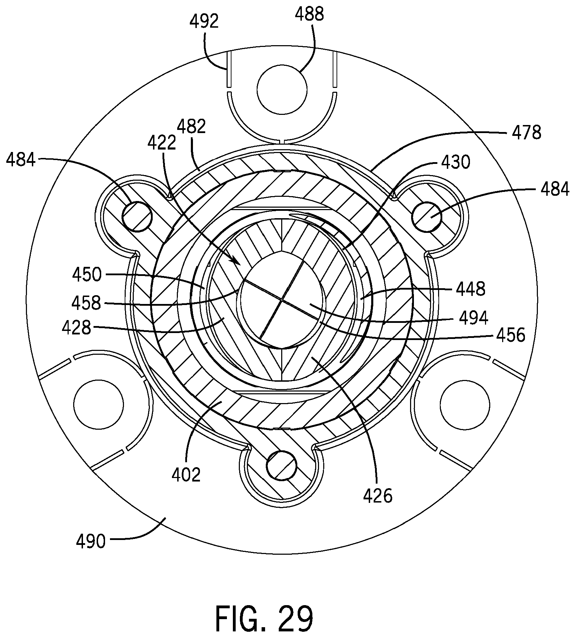

FIGS. 23-29 illustrate an embodiment of a pre-set anchor 400, according to the invention, as also can be equipped with a threaded rod locking device 406. The pre-set anchor 400 can be configured to be installed within a structure (e.g., a plywood deck for the version of the pre-set anchor shown in FIGS. 23-26 or a metal pan deck for the version of the pre-set anchor shown in FIGS. 27-29) prior to concrete being poured thereon. In many aspects, the pre-set anchor 400 is similar to the coupler 100 described above. Correspondingly, similar numbering in the 400 series is used for the pre-set anchor 400 and discussion of similarly numbered or names components relative to the coupler 100 also apply to the anchor 400, and vice versa, unless otherwise noted or required. For example, the pre-set anchor 400 includes a housing 402, a back plate 404, and the threaded rod locking device 406. The housing 402 has a first end 408, a second end 410 with an opening 420, and an internal bore 412 with a tapered section 416. Further, the threaded rod locking device 406 has a plunger 422 and a spring 430. The plunger 422 includes a first plunger half 426 and a second plunger half 428, each with a ledge section 448, 450; a tapered section 452; 454; a first threaded section 456, 458; and a second threaded section 460, 462 and is configured to receive and secure a threaded rod (e.g., the threaded rod 50 shown in FIG. 6) by pushing the threaded rod into the threaded rod locking device 406.

In some aspects, however, the coupler 100 and the pre-set anchor 400 differ from each other. For example, the pre-set anchor 400 further includes a flange 409 extending radially outwardly from the housing 402 at the first end 408, a base 478 with a shell 482 and a plurality of fastener channels 484 extending along an exterior of the shell 482.

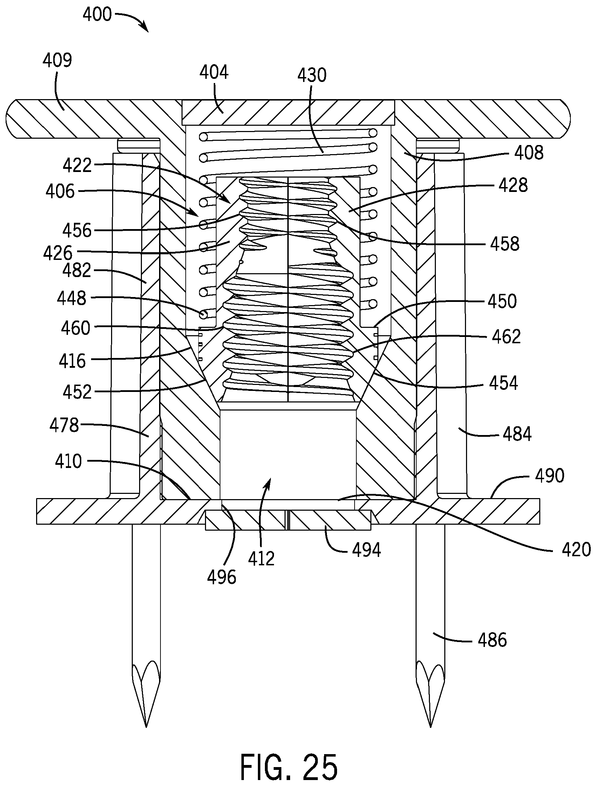

For installation on a plywood deck, the pre-set anchor 400 configured as shown in FIGS. 23-26 can further include a plurality of fasteners (e.g., nails 486) are arranged within the fastener channels 484. Further, the housing 402 is configured to be slidable within the shell 482 of the base 478. The pre-set anchor 400 is movable between an expanded configuration (shown in FIG. 23) in which the flange 409 is spaced from the base 478 and the nails 486 extend along the spaced distance therebetween and a collapsed configuration (shown in FIGS. 24 and 25) in which the flange 409 is adjacent the base 478 and the nails 486 extend outward through the flange 490 of the base 478. The expanded configuration represents a pre-installed configuration and the collapsed configuration represents an installed configuration in which the nails 486 are forced into a plywood form (not shown), for example, prior to the pouring of concrete thereupon.

In some embodiments, a barrier 494 (e.g., a foam gasket as shown adhered within an opening 496 in the base 478) can be provided to protect against debris from entering the housing 402 during construction, for example, during the pouring of the concrete. In some embodiments, the barrier 494 can be similar to the barrier 392 discussed above and can comprise a plurality of fins that are spaced apart and capable of flexing independently of each other to allow a threaded rod (e.g., the threaded rod 50 shown in FIG. 6) to pass through but prevent debris from entering. In some embodiments, the base 478 can be formed from plastic and the barrier 494 can be integrally formed with the base 478.

For installation on a metal pan deck, the pre-set anchor 400 configured as shown in FIGS. 27-29 can be used. The pre-set anchor 400 does not include the nails 486 and can be provided pre-set in the collapsed configuration. As shown, the pre-set anchor 400 also includes a plurality of holes 488 in a flange 490 extending radially outward from the shell 482 of the base 478 to accept fasteners therethrough for a similar purpose to the nails 486, but for securing the pre-set anchor 400 to a metal pan deck prior to the pouring of concrete. Pre-cut lines 492 can also be provided around each of the holes 488, respectively, to allow the fasteners to be removed more easily from the base 478 after the metal pan deck is removed. For example, the pre-cut lines 492 around each of the holes 488 predefine a location along which the holes can be separated from the base, so as the metal pan deck is removed the fasteners to break the base 478 at the pre-cut lines 492 to allow the fasteners, and the metal pan deck, to fall away.

In other embodiments, other configurations are possible. For example, certain features and combinations of features that are presented with respect to particular embodiments in the discussion above can be utilized in other embodiments and in other combinations, as appropriate. In this regard, for example, different configurations of features as presented with respect to a particular one of the devices 100, 200, 300, 400 can be implemented in combination with features of any number of the other devices 100, 200, 300, 400, or others.

Thus, examples of the disclosed technology can provide improved couplers to secure threaded rods. In some examples, particular plunger profiles can help to provide a combination of smoother installation of threaded rods (e.g., without rotation) and relatively strong hold against axial loading of secured rods. In some examples, threaded rods of multiple diameters can be engaged by a single coupler.

In some implementations, devices or systems disclosed herein can be utilized, manufactured, installed, etc. using methods embodying aspects of the disclosed technology. Correspondingly, unless otherwise indicated, any description herein of particular features, capabilities, or intended purposes of a device or system should be considered to disclose, as examples of the disclosed technology a method of using such devices for the intended purposes, a method of otherwise implementing such capabilities, a method of manufacturing relevant components of such a device or system (or the device or system as a whole), and a method of installing disclosed (or otherwise known) components to support such purposes or capabilities. Similarly, unless otherwise indicated, discussion herein of any method of manufacturing or using for a particular device or system, including installing the device or system, should be understood to disclose, as examples of the disclosed technology, the utilized features and implemented capabilities of such device or system.

Some methods of the disclosed technology may be presented above or below with operations listed in a particular order. Unless otherwise required or specified, the operations of such methods can be implemented in different orders, in parallel, or as selected sub-sets of one or more individual operations (e.g., with a particular listed operation being implemented alone, rather than in combination with others).

Features which are described in the context of separate embodiments may also be provided in combination in a single embodiment. Conversely, various features which are, for brevity, described in the context of a single embodiment, may also be provided separately or in any suitable sub-combination.

It is to be understood that the phraseology and terminology used herein is for the purpose of description and should not be regarded as limiting. The use of "including," "comprising," or "having" and variations thereof herein is meant to encompass the items listed thereafter and equivalents thereof as well as additional items. Unless specified or limited otherwise, the terms "mounted," "connected," "supported," and "coupled" and variations thereof are used broadly and encompass both direct and indirect mountings, connections, supports, and couplings. Further, "connected" and "coupled" are not restricted to physical or mechanical connections or couplings.

Also as used herein, unless otherwise specified or limited, directional terms are presented only with regard to the particular embodiment and perspective described. For example, reference to features or directions as "horizontal," "vertical," "front," "rear," "left," "right," "upper," "lower," "rearward," "forward," and so on are generally made with reference to a particular figure or example and are not necessarily indicative of an absolute orientation or direction. However, relative directional terms for a particular embodiment may generally apply to alternative orientations of that embodiment. For example, "front" and "rear" directions or features (or "right" and "left" directions or features, and so on) may be generally understood to indicate relatively opposite directions or features for a particular embodiment, regardless of the absolute orientation of the embodiment (or relative orientation relative to environmental structures). "Lateral" and derivatives thereof generally indicate directions that are generally perpendicular to a vertical direction for a relevant reference frame.

Also as used herein, ordinal numbers are used for convenience of presentation only and are generally presented in an order that corresponds to the order in which particular features are introduced in the relevant discussion. Accordingly, for example, a "first" feature may not necessarily have any required structural or sequential relationship to a "second" feature, and so on. Further, similar features may be referred to in different portions of the discussion by different ordinal numbers. For example, a particular feature may be referred to in some discussion as a "first" feature, while a similar or substantially identical feature may be referred to in other discussion as a "third" feature, and so on.

Unless otherwise specified or limited, the terms "about" and "approximately," as used herein with respect to a reference value, refer to variations from the reference value of ± 15% or less, inclusive of the endpoints of the range. Similarly, "substantially equal" and "substantially the same," as used herein with respect to a reference value, refer to variations from the reference value of ± 5% or less, inclusive of the endpoints of the range.

Also as used herein, unless otherwise specified or limited, "or" indicates a non-exclusive list of components or operations that can be present in any variety of combinations, rather than an exclusive list of components that can be present only as alternatives to each other. For example, a list of "A, B, or C" indicates options of: A; B; C; A and B; A and C; B and C; and A, B, and C. Correspondingly, the term "or" as used herein is intended to indicate exclusive alternatives only when preceded by terms of exclusivity, such as "only one of," or "a single one of." For example, a list of "only one of A, B, or C" indicates options of: A, but not B and C; B, but not A and C; and C, but not A and B. In contrast, a list preceded by "one or more" (and variations thereon) and including "or" to separate listed elements indicates options of one or more of any or all of the listed elements. For example, the phrases "one or more of A, B, or C" and "at least one of A, B, or C" indicate options of: one or more A; one or more B; one or more C; one or more A and one or more B; one or more B and one or more C; one or more A and one or more C; and one or more A, one or more B, and one or more C. Similarly, a list preceded by "a plurality of' (and variations thereon) and including "or" to separate listed elements indicates options of one or more of each of multiple of the listed elements. For example, the phrases "a plurality of A, B, or C" and "two or more of A, B, or C" indicate options of: one or more A and one or more B; one or more B and one or more C; one or more A and one or more C; and one or more A, one or more B, and one or more C.

As used herein, unless otherwise limited or specified, "substantially identical" refers to two or more components or systems that are manufactured according to the same process and specification, with variation between the components or systems that are within the limitations of acceptable tolerances for the relevant process or specification. For example, two components can be considered to be substantially identical if the components are manufactured according to the same standardized manufacturing steps, with the same materials, and within the same acceptable dimensional tolerances (e.g., as specified for a particular process or product).

Also as used herein, unless otherwise specified or limited, "integral" and derivatives thereof (e.g., "integrally") describe elements that are manufactured as a single piece without fasteners, adhesive, or the like to secure separate components together. For example, an element that is stamped, cast, or otherwise molded as a single-piece component from a single piece of sheet metal or other continuous single piece of material, without rivets, screws, other fasteners, or adhesive to hold separately formed pieces together, is an integral (and integrally formed) element. In contrast, an element formed from multiple pieces that are separately formed initially then later fastened together, is not an integral (or integrally formed) element.

As used herein, unless otherwise specified or limited, "diameter" is used relative to passages to indicate a general width of the passage, and not necessarily a geometric circular diameter. In this regard, for example, a "diameter" of a non-circular passage refers to a width of the passage measured similarly as a diameter of a circular passage (e.g., perpendicularly to an axial direction of a passage for a threaded rod). Unless otherwise indicated, such a "diameter" of a non-circular passage refers in particular to a maximum width, for the passage overall or relative to a particular specified reference frame.

Also as used herein, unless otherwise specified or limited, a "cross-section" of a thread (and variations thereof) refers to the profile of a passage defined by the thread, as viewed in the axial direction (i.e., as projected onto a plane perpendicular to the passage axis). Thus, for example, a standard female thread can be considered as having a circular cross-section, although a section of the thread along a plane perpendicular to the thread axis would not necessarily be circular, due to the helical progression of the thread. In particular, a cross-section of a thread indicates a profile defined by the crest of the thread unless otherwise indicated, although cross-sections at other locations on a thread may be specifically indicated (e.g., at a root of the thread), thus referring to the profile of the thread passage at that specific location, as projected onto a perpendicular plane.

The previous description of the disclosed embodiments is provided to enable any person skilled in the art to make or use the invention. Various modifications to these embodiments will be readily apparent to those skilled in the art, and the generic principles defined herein may be applied to other embodiments without departing from the scope of the invention. Thus, the invention is not intended to be limited to the embodiments shown herein but is to be accorded the widest scope consistent with the principles and novel features disclosed herein, and as defined by the appended claims.

## Claims

1. A device for selectively securing threaded rod of different diameters, the device comprising:
a housing (102) with an internal bore (112) extending from a first end to a second end;
a back plate (104) that closes the first end of the internal bore;
a plunger (122) received within the internal bore; and
a biasing member (130) secured by the back plate to provide a biasing force that urges the plunger toward the second end of the internal bore;
the plunger including a first plunger half (126) and a second plunger half (128) that define a passage (164) to receive threaded rods, the first and second plunger halves being separated by a split plane that defines split lines on opposing sides of the passage,
the first and second plunger halves each including a first threaded section (156) sized to engage a first threaded rod having a first outer diameter, and a second threaded section (160) sized to engage a second threaded rod having a second outer diameter different than the first outer diameter, and
threads of the first threaded sections and the second threaded sections transitioning from deepest points that are farthest from the split lines along the corresponding thread, to threadless areas, within the passage, adjacent the split lines along the corresponding thread;
the plunger being movable against the biasing member toward the first end of the internal bore and an open configuration, to open the passage to selectively receive the first threaded rod into sliding engagement with the first threaded sections or receive the second threaded rod into sliding engagement with the second threaded sections; and
the plunger being movable toward the second end of the internal bore to a closed configuration, to selectively secure the first threaded rod in a threaded engagement with the first threaded sections or secure the second threaded rod in a threaded engagement with the second threaded sections.

2. The device of claim 1, wherein the first and second plunger halves (126, 128) are seated against each other in the closed configuration.

3. The device of claim 1, wherein the first and second threaded sections (156, 160) define an oblong cross-section of the passage, with the plunger (122) in the closed configuration.

4. The device of claim 3, wherein the second end of the internal bore includes a tapered section (116) and each of the first and second plunger halves include a tapered section (152);
wherein the biasing force of the biasing member (130) urges the first and second plunger halves (126, 128) toward each other via translation of the tapered sections of the first and second plunger halves along the tapered section of the housing; and
wherein the tapered section of the first and second plunger halve define a circular cross-section, with the plunger in the closed configuration.

5. The device of claim 1, wherein a first inner diameter of the passage (164), extending between the split lines, is larger than a second inner diameter of the passage perpendicular to the first inner diameter, when the plunger is in the closed configuration.

6. The device of claim 5, wherein, with the plunger (122) in the closed configuration, a shape of the passage (164) as viewed in an axial direction is ovular, with internal major diameters of the ovular shape extending between the split lines at the first threaded sections and the second threaded sections.

7. The device of claim 1, wherein, with the plunger (122) in the closed configuration: a shape of the passage (164) as viewed in an axial direction is ovular at the first threaded sections, and an outer periphery of the plunger is ovular at an end opposite the second end of the internal bore; and
wherein, with the plunger in the open configuration: the shape of the passage as viewed in an axial direction is circular at the first threaded sections, and the outer periphery of the plunger is circular at the end opposite the second end of the internal bore.

8. The device of claim 7, wherein, with the plunger (122) open to receive the first threaded rod in sliding engagement with the first threaded sections, the shape of the passage (164) as viewed in the axial direction is circular at the first threaded sections, and an internal diameter at the first threaded sections, measured perpendicular to the split plane, is substantially equal to the first outer diameter of the first threaded rod; and
wherein, with the plunger open to receive the second threaded rod in sliding engagement with the second threaded sections, the shape of the passage as viewed in the axial direction is circular at the second threaded sections, and an internal diameter at the second threaded sections, measured perpendicular to the split plane, is substantially equal to the second outer diameter of the second threaded rod.

9. The device of claim 1, wherein the first and second plunger halves (126, 128) collectively define an entrance chamfer at an entrance to the first threaded sections, the entrance chamfer defining a circular cross-section when the plunger is in the closed configuration.

10. The device of claim 1, wherein each of the first and second plunger halves (126, 128) include:
a first end;
a second end, opposite the first end;
an outer surface extending, with the passage, between the first and second ends; and
a ledge section extending radially outward from the outer surface; and
wherein the biasing member extends along the outer surface to be seated on the ledge sections, with the biasing member surrounding the plunger along the passage; and
wherein the outer surface defines an ovular outer periphery in the closed configuration and a circular outer periphery in the open configuration.

## Patentansprüche

1. Vorrichtung zum selektiven Sichern von Gewindestangen mit unterschiedlichen Durchmessern, wobei die Vorrichtung Folgendes umfasst:
ein Gehäuse (102) mit einer Innenbohrung (112), die sich von einem ersten Ende zu einem zweiten Ende erstreckt;
eine Rückplatte (104), die das erste Ende der Innenbohrung verschließt;
einen Kolben (122), der innerhalb der Innenbohrung aufgenommen ist; und
ein Vorspannglied (130), das durch die Rückplatte gesichert ist, um eine Vorspannkraft bereitzustellen, die den Kolben in Richtung des zweiten Endes der Innenbohrung drängt;
wobei der Kolben eine erste Kolbenhälfte (126) und eine zweite Kolbenhälfte (128) beinhaltet, die einen Durchgang (164) definieren, um Gewindestangen aufzunehmen, wobei die erste und die zweite Kolbenhälfte durch eine Teilungsebene getrennt sind, die geteilte Linien auf gegenüberliegenden Seiten des Durchgangs definiert,
wobei die erste und die zweite Kolbenhälfte jeweils einen ersten Gewindeabschnitt (156), der dazu bemessen ist, in eine erste Gewindestange mit einem ersten Außendurchmesser einzugreifen, und einen zweiten Gewindeabschnitt (160), der dazu bemessen ist, in eine zweite Gewindestange mit einem zweiten Außendurchmesser einzugreifen, der sich von dem ersten Außendurchmesser unterscheidet, beinhalten und
wobei Gewinde der ersten Gewindeabschnitte und der zweiten Gewindeabschnitte von tiefsten Punkten, die am weitesten von den geteilten Linien entlang des entsprechenden Gewindes entfernt sind, in gewindelose Bereiche innerhalb des Durchgangs benachbart zu den geteilten Linien entlang des entsprechenden Gewindes übergehen;
wobei der Kolben gegen das Vorspannelement in Richtung des ersten Endes der Innenbohrung und einer offenen Konfiguration bewegbar ist, um den Durchgang zu öffnen, um selektiv die erste Gewindestange in Gleiteingriff mit den ersten Gewindeabschnitten aufzunehmen oder die zweite Gewindestange in Gleiteingriff mit den zweiten Gewindeabschnitten aufzunehmen; und
wobei der Kolben in Richtung des zweiten Endes der Innenbohrung in eine geschlossene Konfiguration bewegbar ist, um die erste Gewindestange selektiv in einem Gewindeeingriff mit den ersten Gewindeabschnitten zu sichern oder die zweite Gewindestange in einem Gewindeeingriff mit den zweiten Gewindeabschnitten zu sichern.

2. Vorrichtung nach Anspruch 1, wobei die erste und die zweite Kolbenhälfte (126, 128) in der geschlossenen Konfiguration aneinander anliegen.

3. Vorrichtung nach Anspruch 1, wobei der erste und der zweite Gewindeabschnitt (156, 160) einen länglichen Querschnitt des Durchgangs definieren, wobei sich der Kolben (122) in der geschlossenen Konfiguration befindet.

4. Vorrichtung nach Anspruch 3, wobei das zweite Ende der Innenbohrung einen verjüngten Abschnitt (116) beinhaltet und jede der ersten und der zweiten Kolbenhälfte einen verjüngten Abschnitt (152) beinhaltet;
wobei die Vorspannkraft des Vorspannelements (130) die erste und die zweite Kolbenhälfte (126, 128) über eine Verschiebung der verjüngten Abschnitte der ersten und der zweiten Kolbenhälfte entlang des verjüngten Abschnitts des Gehäuses aufeinander zu drängt; und
wobei der verjüngte Abschnitt der ersten und der zweiten Kolbenhälfte einen kreisförmigen Querschnitt definieren, wobei sich der Kolben in der geschlossenen Konfiguration befindet.

5. Vorrichtung nach Anspruch 1, wobei ein erster Innendurchmesser des Durchgangs (164), der sich zwischen den geteilten Linien erstreckt, größer als ein zweiter Innendurchmesser des Durchgangs senkrecht zu dem ersten Innendurchmesser ist, wenn sich der Kolben in der geschlossenen Konfiguration befindet.

6. Vorrichtung nach Anspruch 5, wobei, wenn sich der Kolben (122) in der geschlossenen Konfiguration befindet, eine Form des Durchgangs (164) in einer axialen Richtung betrachtet ovular ist, wobei sich größere Innendurchmesser der ovularen Form zwischen den geteilten Linien an den ersten Gewindeabschnitten und den zweiten Gewindeabschnitten erstrecken.

7. Vorrichtung nach Anspruch 1, wobei, wenn sich der Kolben (122) in der geschlossenen Konfiguration befindet: eine Form des Durchgangs (164) in einer axialen Richtung betrachtet an den ersten Gewindeabschnitten ovular ist und ein Außenumfang des Kolbens an einem Ende gegenüber dem zweiten Ende der Innenbohrung ovular ist; und
wobei, wenn sich der Kolben in der offenen Konfiguration befindet: die Form des Durchgangs in einer axialen Richtung betrachtet an den ersten Gewindeabschnitten kreisförmig ist und der Außenumfang des Kolbens an dem Ende gegenüber dem zweiten Ende der Innenbohrung kreisförmig ist.

8. Vorrichtung nach Anspruch 7, wobei, wenn der Kolben (122) offen ist, um die erste Gewindestange in Gleiteingriff mit den ersten Gewindeabschnitten aufzunehmen, die Form des Durchgangs (164) in der axialen Richtung betrachtet an den ersten Gewindeabschnitten kreisförmig ist und ein Innendurchmesser an den ersten Gewindeabschnitten, der senkrecht zu der Teilungsebene gemessen wird, im Wesentlichen gleich dem ersten Außendurchmesser der ersten Gewindestange ist; und
wobei, wenn der Kolben offen ist, um die zweite Gewindestange in Gleiteingriff mit den zweiten Gewindeabschnitten aufzunehmen, die Form des Durchgangs in der axialen Richtung betrachtet an den zweiten Gewindeabschnitten kreisförmig ist und ein Innendurchmesser an den zweiten Gewindeabschnitten, der senkrecht zu der Teilungsebene gemessen wird, im Wesentlichen gleich dem zweiten Außendurchmesser der zweiten Gewindestange ist.

9. Vorrichtung nach Anspruch 1, wobei die erste und die zweite Kolbenhälfte (126, 128) gemeinsam eine Eingangsfase an einem Eingang zu den ersten Gewindeabschnitten definieren, wobei die Eingangsfase einen kreisförmigen Querschnitt definiert, wenn sich der Kolben in der geschlossenen Konfiguration befindet.

10. Vorrichtung nach Anspruch 1, wobei jede der ersten und der zweiten Kolbenhälfte (126, 128) Folgendes beinhaltet:
ein erstes Ende;
ein zweites Ende gegenüber dem ersten Ende;
eine Außenfläche, die sich mit dem Durchgang zwischen dem ersten und dem zweiten Ende erstreckt; und
einen Vorsprungabschnitt, der sich von der Außenfläche radial nach außen erstreckt; und
wobei sich das Vorspannglied entlang der Außenfläche erstreckt, um auf den Vorsprungabschnitten anzuliegen, wobei das Vorspannglied den Kolben entlang des Durchgangs umgibt; und
wobei die Außenfläche einen ovularen Außenumfang in der geschlossenen Konfiguration und einen kreisförmigen Außenumfang in der offenen Konfiguration definiert.

## Revendications

1. Dispositif pour fixer sélectivement tige filetée de différents diamètres, le dispositif comprenant :
un boîtier (102) avec un alésage interne (112) s'étendant à partir d'une première extrémité jusqu'à une seconde extrémité ;
une plaque arrière (104) qui ferme la première extrémité de l'alésage interne ;
un plongeur (122) reçu à l'intérieur de l'alésage interne ; et
un élément de sollicitation (130) fixé par la plaque arrière pour fournir une force de sollicitation qui pousse le plongeur vers la seconde extrémité de l'alésage interne ;
le plongeur incluant une première moitié de plongeur (126) et une seconde moitié de plongeur (128) qui définissent un passage (164) pour recevoir des tiges filetées, les première et seconde moitiés de plongeur étant séparées par un plan de division qui définit des lignes de division sur des côtés opposés du passage, les première et seconde moitiés de plongeur incluant chacune une première section filetée (156) dimensionnée pour venir en prise avec une première tige filetée ayant un premier diamètre externe, et une seconde section filetée (160) dimensionnée pour venir en prise avec une seconde tige filetée ayant un second diamètre externe différent du premier diamètre externe, et
des filets des premières sections filetées et des secondes sections filetées effectuant une transition à partir de points les plus profonds qui sont les plus éloignés des lignes de division le long du filet correspondant, vers des zones sans filet, à l'intérieur du passage, adjacentes aux lignes de division le long du filet correspondant ;
le plongeur étant mobile contre l'élément de sollicitation vers la première extrémité de l'alésage interne et une configuration ouverte, pour ouvrir le passage pour recevoir sélectivement la première tige filetée en prise coulissante avec les premières sections filetées ou recevoir la seconde tige filetée en prise coulissante avec les secondes sections filetées ; et
le plongeur étant mobile vers la seconde extrémité de l'alésage interne vers une configuration fermée, pour fixer sélectivement la première tige filetée dans une mise en prise filetée avec les premières sections filetées ou fixer la seconde tige filetée dans une mise en prise filetée avec les secondes sections filetées.

2. Dispositif de la revendication 1, dans lequel les première et seconde moitiés de plongeur (126, 128) sont en appui l'une contre l'autre dans la configuration fermée.

3. Dispositif de la revendication 1, dans lequel les premières et secondes sections filetées (156, 160) définissent une section transversale oblongue du passage, avec le plongeur (122) dans la configuration fermée.

4. Dispositif de la revendication 3, dans lequel la seconde extrémité de l'alésage interne inclut une section effilée (116) et chacune des première et seconde moitiés de plongeur incluent une section effilée (152) ;
dans lequel la force de sollicitation de l'élément de sollicitation (130) pousse les première et seconde moitiés de plongeur (126, 128) l'une vers l'autre par l'intermédiaire de la translation des sections effilées des première et seconde moitiés de plongeur le long de la section effilée du boîtier ; et
dans lequel la section effilée des première et seconde moitié de plongeur définissent une section transversale circulaire, avec le plongeur dans la configuration fermée.

5. Dispositif de la revendication 1, dans lequel un premier diamètre interne du passage (164), s'étendant entre les lignes de division, est plus grand qu'un second diamètre interne du passage perpendiculaire au premier diamètre interne, lorsque le plongeur est dans la configuration fermée.

6. Dispositif de la revendication 5, dans lequel, avec le plongeur (122) dans la configuration fermée, une forme du passage (164) telle que vue dans une direction axiale est ovulaire, avec des diamètres majeurs internes de la forme ovulaire s'étendant entre les lignes de division au niveau des premières sections filetées et des secondes sections filetées.

7. Dispositif de la revendication 1, dans lequel, avec le plongeur (122) dans la configuration fermée : une forme du passage (164) telle que vue dans une direction axiale est ovulaire au niveau des premières sections filetées, et une périphérie externe du plongeur est ovulaire au niveau d'une extrémité opposée à la seconde extrémité de l'alésage interne ; et
dans lequel, avec le plongeur dans la configuration ouverte : la forme du passage telle que vue dans une direction axiale est circulaire au niveau des premières sections filetées, et la périphérie externe du plongeur est circulaire au niveau de l'extrémité opposée à la seconde extrémité de l'alésage interne.

8. Dispositif de la revendication 7, dans lequel, avec le plongeur (122) ouvert pour recevoir la première tige filetée en prise coulissante avec les premières sections filetées, la forme du passage (164) telle que vue dans la direction axiale est circulaire au niveau des premières sections filetées, et un diamètre interne au niveau des premières sections filetées, mesuré perpendiculaire au plan de division, est sensiblement égal au premier diamètre externe de la première tige filetée ; et
dans lequel, avec le plongeur ouvert pour recevoir la seconde tige filetée en prise coulissante avec les secondes sections filetées, la forme du passage telle que vue dans la direction axiale est circulaire au niveau des secondes sections filetées, et un diamètre interne au niveau des secondes sections filetées, mesuré perpendiculaire au plan de division, est sensiblement égal au second diamètre externe de la seconde tige filetée.

9. Dispositif de la revendication 1, dans lequel les première et seconde moitiés de plongeur (126, 128) définissent collectivement un chanfrein d'entrée au niveau d'une entrée vers les premières sections filetées, le chanfrein d'entrée définissant une section-transversale circulaire lorsque le plongeur est dans la configuration fermée.

10. Dispositif de la revendication 1, dans lequel chacune des première et seconde moitiés de plongeur (126, 128) incluent :
une première extrémité ;
une seconde extrémité, opposée à la première extrémité ;
une surface externe s'étendant, avec le passage, entre les première et seconde extrémités ; et
une section de rebord s'étendant radialement vers l'extérieur à partir de la surface externe ; et
dans lequel l'élément de sollicitation s'étend le long de la surface externe pour être en appui sur les sections de rebord, avec l'élément de sollicitation entourant le plongeur le long du passage ; et
dans lequel la surface externe définit une périphérie externe ovulaire dans la configuration fermée et une périphérie externe circulaire dans la configuration ouverte.
